# EUROPÄISCHE PATENTSCHRIFT

(11) **EP 2 145 531 B1**
(45) Veröffentlichungstag und Bekanntmachung des Hinweises auf die Patenterteilung: **20.07.2011**
(21) Anmeldenummer: 09007029.3
(22) Anmeldetag: 27.05.2009
(51) Int. Cl.: A01F 29/10, A01F 29/14

(54) **Verbindungsanordnung, insbesondere zwischen einer Einzugwalze und einem Getriebe eines Feldhäckslers**
Attachment assembly, in particular between a feed roll and a drive of a chaff cutter
Agencement d'une liaison, notamment entre un cylindre d'alimentation et l'entraînement d'une récolteuse-hacheuse

(30) Priorität: 18.07.2008 DE 102008033917
(43) Veröffentlichungstag der Anmeldung: 20.01.2010
(73) Patentinhaber: GKN Walterscheid GmbH, 53797 Lohmar (DE)
(72) Erfinder: Pietsch, Gottfried, D-02627 Hochkirch (DE); Rauschenbach, Stefan, D-02692 Grosspostwitz (DE); Roth, Andreas, D-53819 Neunkirchen-Seelscheid (DE)
(74) Vertreter: Müller, Thomas Michael

(56) Entgegenhaltungen:
- EP-A- 0 300 299
- EP-A- 1 151 658
- DE-A1-102005 035 156
- GB-A- 2 040 660

## Beschreibung

Die Erfindung betrifft eine Verbindungsanordnung, insbesondere zwischen einer Einzugswalze und einem Getriebe eines Feldhäckslers.

Die DE 10 2005 035 156 A1 zeigt eine Kupplung zum Verbinden eines Sonnenrades eines Planetengetriebes mit einem Getriebegehäuse. Das Sonnenrad ist hierzu über Wälzlager in dem Getriebegehäuse drehbar gelagert und weist einen Kupplungshohlraum auf. Der Kupplungshohlraum öffnet sich in Richtung zu einer Wand des Getriebegehäuses. In dem Getriebegehäuse ist ebenfalls ein Kupplungshohlraum vorgesehen, der sich in Richtung zum Kupplungshohlraum des Sonnenrades öffnet. In den Kupplungshohlräumen sind sich axial erstreckende Kerbverzahnungen vorgesehen, die als Innenverzahnungen ausgebildet sind. In den beiden Kupplungshohlräumen befindet sich ein Kolben, der auf seiner Außenumfangsfläche ebenfalls mit einer Kerbverzahnung ausgebildet ist und der mit seiner Kerbverzahnung in der Kerbverzahnung des Sonnenrades axial verstellbar sitzt. Hierbei ist der Kolben zwischen einer eingerückten und ausgerückten Position verstellbar. In der eingerückten Position befindet sich der Kolben mit seiner Kerbverzahnung vollständig in dem Kupplungshohlraum des Sonnenrades. In der ausgerückten Stellung greift die Kerbverzahnung des Kolbens sowohl in die Kerbverzahnung des Sonnenrades als auch in die des Getriebegehäuses ein, so dass das Sonnenrad gegenüber dem Gehäuse blockiert ist. Zum Verstellen des Kolbens ist dieser mittels einer Druckfeder zur ausgerückten Stellung mit Kraft beaufschlagt und kann hydraulisch in die eingerückte Stellung überführt werden.

Feldhäcksler dienen zum Ernten und Zerkleinern von Erntegut. Hierzu weist der Feldhäcksler ein Schneidwerk auf, wobei das Erntegut mittels eines Vorsatzgerätes dem Schneidwerk zugeführt wird und ein Zuführorgan aufweist, welches das Erntegut weiter zu einer Einzugseinheit des Feldhäckslers fördert. Die Einzugseinheit umfasst mehrere Einzugswalzenpaare, zwischen denen der Erntegutstrom hindurchgeleitet wird. Die Einzugswalzen werden durch Einzugsgetriebe angetrieben. Von der Einzugseinheit wird der Erntegutstrom weiter zu einer Häckseltrommel geleitet, wo das Erntegut zerkleinert wird. An die Häckseltrommel schließt sich in der Regel ein Aufbereiter zum Aufbrechen von Körnern an. Das Erntegut wird von dort zu einem Nachbeschleuniger weitergeleitet, der das Erntegut durch einen Auswurfkanal nach außen fördert, so dass das Erntegut an ein Ladefahrzeug übergeben werden kann. Ein solcher Feldhäcksler ist zum Beispiel aus der EP 1 151 658 A1 bekannt.

Zu Wartungszwecken ist es erforderlich, die Einzugswalzen der Einzugseinheit entfernen zu können. Die Wellen der Einzugswalzen sind in der Regel über eine Spline-Verbindung, d.h. über eine Längsverzahnung mit Wellen der antreibenden Getriebe verbunden. Die Wellen der Einzugswalzen weisen hierzu in der Regel ein Wellenende mit einer Längsverzahnung auf ihrer Außenumfangsfläche auf. Die Wellenenden sind in Hohlwellen mit entsprechend ausgebildeten Innenlängsverzahnungen eingesteckt. Zum Entfernen der Einzugswalzen muss die Lagerung an der vom Wellenende der Einzugswalze abgewandten Seite gelöst werden, damit die Einzugswalze zunächst axial derart verschoben werden kann, dass das Wellenende aus der Hohlwelle des Getriebes herausgezogen werden kann. Daraufhin lässt sich die Einzugswalze, in Fahrtrichtung des Feldhäckslers betrachtet, nach vorne entnehmen.

Aufgabe der vorliegenden Erfindung ist es, eine Verbindung zwischen einem Getriebe und einer Einzugswalze vorzusehen, die eine einfachere Demontage der Einzugswalze ermöglicht.

Die Aufgabe wird durch eine Verbindungsanordnung, insbesondere zwischen einer Einzugswalze und einem Getriebe eines Feldhäckslers, umfassend
eine erste Welle, die in einem Getriebegehäuse um eine Drehachse drehbar gelagert ist und eine zentrale Bohrung aufweist,
eine zweite Welle, die mit einer Einzugswalze verbindbar ist und die um die Drehachse drehbar gelagert ist, wobei die zweite Welle eine zentrale Bohrung aufweist, die mit der Bohrung der ersten Welle fluchtet,
einen Verbindungszapfen, der in der Bohrung einer der beiden Wellen sitzt und zur Drehmomentmitnahme mit dieser formschlüssig verbunden ist und der entlang der Drehachse zwischen einer in die Bohrung der anderen der beiden Wellen eingeschobenen Verbindungsposition und einer aus der Bohrung der anderen der beiden Wellen herausgezogenen Freigabeposition axial verschiebbar ist, wobei der Verbindungszapfen in der Verbindungsposition formschlüssig mit der anderen der beiden Wellen verbunden ist,
wobei die erste Welle als Hohlwelle gestaltet ist und
wobei der Verbindungszapfen ausgehend von der der zweiten Welle entgegen gesetzten Seite der ersten Welle in die Bohrung der ersten Welle eingeschoben werden kann,
gelöst.

Somit lässt sich die Verbindung zwischen der zweiten Welle der Einzugswalze und der ersten Welle des Getriebes einfach lösen. Es muss lediglich der Verbindungszapfen aus seiner Verbindungsposition in die Freigabeposition überführt werden. In dieser ist der Verbindungszapfen nicht in der Bohrung der anderen der beiden Wellen angeordnet. Da die beiden Wellen koaxial zueinander angeordnet sind und in Längsrichtung der Drehachse nebeneinander angeordnet sind, kann die Einzugswalze einfach in Fahrtrichtung des Feldhäckslers betrachtet nach vorne entnommen werden, d.h. die zweite Welle kann in radialer Richtung zur Drehachse bewegt werden. Eine axiale Verschiebung der zweiten Welle beziehungsweise der Einzugswalze ist nicht erforderlich.

Hierbei ist die erste Welle als Hohlwelle gestaltet, wobei der Verbindungszapfen von der der zweiten Welle entgegen gesetzten Seite der Hohlwelle in die Bohrung der Hohlwelle eingeschoben werden kann. Somit ist der Verbindungszapfen von der der zweiten Welle abgewandten Seite zugänglich und kann von dieser Seite betätigt werden, um den Verbindungszapfen zwischen Verbindungsposition und Freigabeposition zu verschieben.

In einer bevorzugten Ausgestaltung ist hierbei vorgesehen, dass der Verbindungszapfen in der Bohrung der ersten Welle sitzt und in der Verbindungsposition in die Bohrung der zweiten Welle eingeschoben und in der Freigabeposition aus der Bohrung der zweiten Welle herausgezogen ist.

Insbesondere, wenn die erste Welle auf der der zweiten Welle abgewandten Seite des Getriebegehäuses aus diesem herausgeführt ist, ergibt sich eine besonders günstige Zugänglichkeit zum Verbindungszapfen und somit eine einfache Handhabung bei der Demontage der zweiten Welle.

Der Verbindungszapfen kann auf einer Außenumfangsfläche eine Längsverzahnung aufweisen, die mit einer Längsverzahnung in einer Innenumfangsfläche der Bohrung der ersten Welle in Eingriff ist. Hierdurch ist eine sichere Drehmomentübertragung zwischen erster Welle und Verbindungszapfen gewährleistet.

Zusätzlich kann vorgesehen sein, dass der Verbindungszapfen auf einer Außenumfangsfläche eine Längsverzahnung aufweist, die in der Verbindungsposition mit einer Längsverzahnung in einer Innenumfangsfläche der Bohrung der zweiten Welle in Eingriff ist.

Hierbei kann vorgesehen sein, dass der Verbindungszapfen eine einzige Längsverzahnung auf seiner Außenumfangsfläche aufweist, die sowohl in die Längsverzahnung der ersten Welle als auch in die Längsverzahnung der zweiten Welle eingreift. Alternativ kann vorgesehen sein, dass auf dem Verbindungszapfen zwei Längsverzahnungen auf der Außenumfangsfläche vorgesehen sind, die jeweils in eine der Längsverzahnungen der Bohrungen eingreifen. Die Längsverzahnungen können auf unterschiedlich großen Durchmessern angeordnet sein.

Um in begrenztem Maße Winkelabweichungen zwischen der ersten Welle und der zweiten Welle ausgleichen zu können, kann vorgesehen sein, dass zwischen der Längsverzahnung des Verbindungszapfens und der mit dieser in Eingriff befindlichen Längsverzahnung der zweiten Welle ein Radialspiel vorgesehen ist. Hierbei ist das Radialspiel größer ausgebildet, als üblicherweise bei Längsverzahnungen dieser Art vorzusehen ist. Darüber hinaus kann die Längsverzahnung des Verbindungszapfens und/oder die Längsverzahnung der zweiten Welle verhältnismäßig kurz ausgebildet sein, um möglichst ohne Verkantungen Winkelabweichungen ausgleichen zu können. Alternativ kann die Längsverzahnung auf dem Verbindungszapfen auch als Bogenverzahnung ausgebildet sein, um ein Verkippen zu ermöglichen.

Eine genaue Zentrierung des Verbindungszapfens gegenüber der zweiten Welle wird dadurch erzielt, dass die zweite Welle einen Zentrierzapfen aufweist, der in der Verbindungsposition des Verbindungszapfens in einer Zentrierausnehmung des Verbindungszapfens sitzt.

Hierbei kann die Außenfläche des Zentrierzapfens zumindest teilweise ballig ausgebildet sein, um Winkelabweichungen zwischen dem Verbindungszapfen und der zweiten Welle zuzulassen.

Es kann vorgesehen sein, dass die Bohrung der zweiten Welle als Sacklochbohrung ausgebildet ist, in der ein Zentrierelement einsitzt, wobei das Zentrierelement den Zentrierzapfen aufweist.

In einer besonderen Ausgestaltung der Erfindung ist eine Hülse vorgesehen, die axial verschiebbar auf einer der beiden Wellen sitzt, vorzugsweise auf der zweiten Welle, und in einer Sperrposition zusätzlich die andere der beiden Wellen, vorzugsweise die erste Welle, teilweise aufnimmt.

Eine bevorzugte Ausführungsform wird im folgenden anhand der Figuren näher erläutert. Hierin zeigt
- Figur 1: eine perspektivische Explosionsdarstellung einer Antriebsanordnung eines Feldhäckslers,
- Figur 2: einen Längsschnitt einer erfindungsgemäßen Verbindungsanordnung,
- Figur 3: einen Längsschnitt der ersten Welle und
- Figur 4: einen Halbquerschnitt der Hülse.

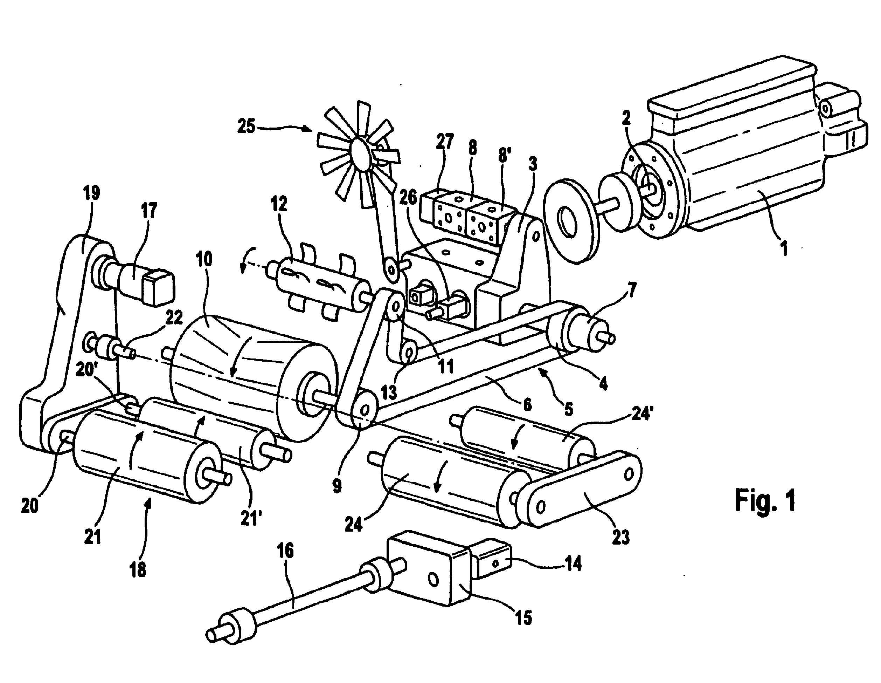

Figur 1 zeigt eine perspektivische Explosionsdarstellung eines Antriebs eines Feldhäckslers. Der Antrieb umfasst einen Antriebsmotor 1 in Form eines Verbrennungsmotors. Der Antriebsmotor 1 ist über eine Kurbelwelle 2 mit einem Motorabtriebsgetriebe 3 antriebsverbunden und treibt dieses an. Das Motorabtriebsgetriebe 3 ist als Verteilergetriebe gestaltet und treibt unter anderem eine Riemenscheibe 4 an, welche als Antriebsriemenscheibe für einen Riementrieb 5 dient und einen Riemen 6 antreibt. Die Antriebsriemenscheibe 4 kann mittels einer Schaltkupplung 7 vom Antrieb des Motorabtriebsgetriebes 3 wahlweise getrennt oder diesem zugeschaltet werden. Somit kann bei laufendem Antriebsmotor 1 der Riementrieb 5 abgeschaltet werden. Über die Schaltkupplung 7 wird ferner eine erste Hydropumpe 8 wahlweise zu- oder abgeschaltet. Hierzu ist eine Antriebswelle zum Antreiben der ersten Hydropumpe 8 und der Antriebsriemenscheibe 4 antriebsverbunden.

Der Riementrieb 5 umfasst ferner eine erste Abtriebsriemenscheibe 9 zum Antreiben einer Häckseltrommel 10. Die Häckseltrommel 10 dient zum Zerkleinern eines Erntegutstroms. Der Emtegutstrom wird von der Häckseltrommel 10 weiter zu einer Nachbeschleunigertrommel 12 gefördert, von wo aus das Erntegut über einen hier nicht dargestellten Auswurfkanal gefördert wird. Die Nachbeschleunigertrommel 12 wird über eine zweite Abtriebsriemenscheibe 11 des Riementriebs 5 angetrieben. Im vorliegenden Fall befindet sich die zweite Abtriebsscheibe 11 im Leertrum des Riementriebs 5 zwischen der Antriebsriemenscheibe 4 und der ersten Abtriebsriemenscheibe 9. Im Leertrum befindet sich ferner, in Bewegungsrichtung des Riemens 6 betrachtet, vor der zweiten Abtriebsriemenscheibe 11 ein Riemenspanner 13 zum Spannen des Riemens 6.

Die erste Hydropumpe 8 ist über hier nicht dargestellte Hydraulikleitungen mit einem ersten Hydromotor 14 verbunden und treibt diesen hydraulisch an. Der erste Hydromotor 14 ist mit einem Getriebe 15 antriebsverbunden, welches wiederum abtriebsseitig mit einer Gelenkwellenanordnung 16 zum Antreiben eines hier nicht dargestellten Vorsatzgerätes, z.B. einem Pick-up und/oder einem Querförderer, verbunden ist.

Die erste Hydropumpe 8 ist mit einer weiteren ersten Hydropumpe 8' verbunden. Im vorliegenden Fall handelt es sich um zwei direkt hintereinander geschaltete erste Hydropumpen 8, 8'. Grundsätzlich ist es jedoch auch denkbar, dass eine einzige erste Hydropumpe verwendet wird. Die weitere erste Hydropumpe 8' ist mit einem zweiten Hydromotor 17 zum Antreiben einer Einzugseinheit 18 verbunden. Es ist jedoch auch vorstellbar, dass die beiden ersten Hydropumpen 8, 8' in einem gemeinsamen Hydraulikkreislauf den ersten Hydromotor 14 und den zweiten Hydromotor 17 antreiben. Im vorliegenden Fall ist der zweite Hydromotor 17 über nicht dargestellte Hydraulikleitungen mit der weiteren ersten Hydropumpe 8' verbunden und wird von dieser angetrieben. Der zweite Hydromotor 17 ist mit einem ersten Einzugsgetriebe 19 antriebsverbunden. Das erste Einzugsgetriebe 19 weist mehrere Abtriebswellen 20, 20', 20" auf, die jeweils mit einer unteren Einzugswalze 21, 21' antriebsverbunden sind und diese drehend antreiben. Über eine Gelenkwelle 22 ist das erste Einzugsgetriebe 19 zudem mit einem zweiten Einzugsgetriebe 23 verbunden, über welches obere Einzugswalzen 24, 24' drehend angetrieben werden. Die Einzugseinheit 18 dient dazu, einen Emtegutstrom der Häckseltrommel 10 zuzuführen.

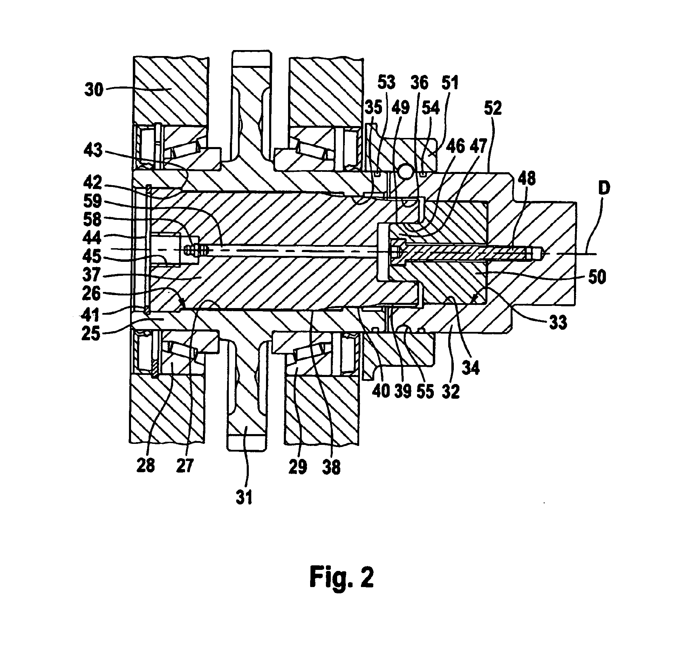

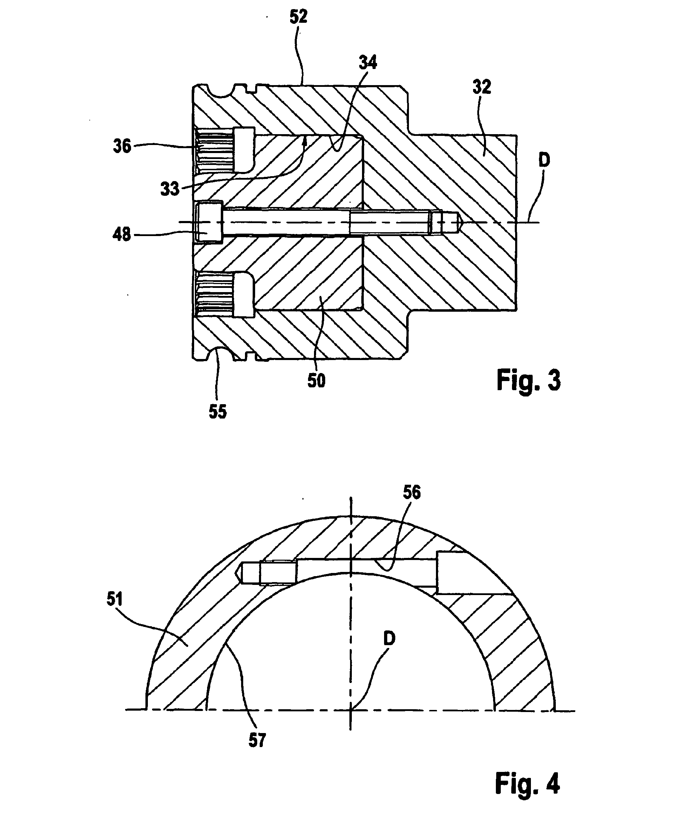

Die Figuren 2 bis 4 zeigt eine erfindungsgemäße Verbindungsanordnung zwischen einer der Antriebswellen des Einzugsgetriebes gemäß Figur 1 und der zugehörigen Einzugswalze. Die Antriebswelle ist in den Figuren 2 bis 4 als eine erste Welle 25 in Form einer Hohlwelle mit einer Durchgangsbohrung 26 dargestellt, welche eine Innenumfangsfläche 27 aufweist. Die erste Welle 25 ist über Kegelrollenlager 28, 29 in einem Getriebegehäuse 30 um eine Drehachse D drehbar gelagert. Die erste Welle 25 ist zudem einstückig mit einem Stirnrad 31 einer Getriebestufe verbunden und kämmt mit einem hier nicht dargestellten weiteren Stirnrad des Einzugsgetriebes**.** Über das Stirnrad 31 wird die erste Welle 25 angetrieben.

Die Verbindungsanordnung umfasst ferner eine zweite Welle 32, die ebenfalls um die Drehachse D drehbar angeordnet ist und bezogen auf die Drehachse D benachbart zur ersten Welle 25 angeordnet ist An dem der ersten Welle 25 zugewandten Ende der zweiten Welle 52 weist diese eine zentrale Sacklochbohrung 33 auf, welche eine koaxial zur Drehachse D angeordnete Innenumfangsfläche 34 aufweist.

In der Innenumfangsfläche 27 der Durchgangsbohrung 26 ist an dem der zweiten Welle 32 zugewandten Ende der Durchgangsbohrung 26 eine Längsverzahnung 35 in die Innenumfangsfläche 27 eingebracht. Ferner ist in der Innenumfangsfläche 34 der Sacklochbohrung 33 an dem der ersten Welle 25 zugewandtem Ende ebenfalls eine Längsverzahnung 36 eingebracht. Zur Drehmomentübertragung zwischen der ersten Welle 25 und der zweiten Welle 32 ist ein Verbindungszapfen 37 vorgesehen, der in der Durchgangsbohrung 26 der ersten Welle 25 sitzt. Der Verbindungszapfen 37 kann von dem der zweiten Welle 32 abgewandten Ende der Durchgangsbohrung 26 in diese eingeschoben werden, bis dieser eine Verbindungsposition erreicht, wie sie in Figur 2 dargestellt ist. In der Verbindungsposition ragt der Verbindungszapfen 37 an dem der zweiten Welle 32 zugewandtem Ende der Durchgangsbohrung 26 aus dieser heraus und taucht in die Sacklochbohrung 33 der zweiten Welle 32 ein. Der Verbindungszapfen 37 kann in der in Figur 2 gezeigten Darstellung nach links gezogen werden, bis der Verbindungszapfen 37 eine Freigabeposition erreicht, in der der Verbindungszapfen 37 vollständig aus der Sacklochbohrung 33 herausgezogen ist bzw. nicht mehr in Richtung zur zweiten Welle 32 aus der Durchgangsbohrung 26 hervorragt.

Zur Drehmomentübertragung sind in einer Außenumfangsfläche 38 des Verbindungszapfens 37 zwei Längsverzahnungen 39, 40 eingebracht, die an dem der zweiten Welle 32 zugewandtem Ende des Verbindungszapfens 37 vorgesehen sind und axial hintereinander angeordnet sind. Eine der Längsverzahnungen 39 ist in der Verbindungsposition mit der Längsverzahnung 36 der Sacklochbohrung 33 in Eingriff. In der Verbindungsposition ist ferner die andere Längsverzahnung 40 des Verbindungszapfens 37 mit der Längsverzahnung 35 der Durchgangsbohrung 26 in Eingriff. Somit kann Drehmoment von der ersten Welle 25 über die Längsverzahnungen 35, 40 und dann über die Längsverzahnungen 39, 36 auf die zweite Welle 32 übertragen werden. Wird der Verbindungszapfen 37 in seine Freigabeposition überführt, ist die Längsverzahnung 40 des Verbindungszapfens 37 nicht mehr in Eingriff zur Längsverzahnung 36 der zweiten Welle 32, so dass keine Drehmomentübertragung mehr erfolgt. Darüber hinaus kann in dieser Position die zweite Welle 32 radial zur Drehachse D verschoben werden, um zum Beispiel die Einzugswalze zu entfernen.

Der Verbindungszapfen 37 ist mittels eines Sicherungsrings 41, der in einer Umfangsnut 44 der Durchgangsbohrung 62 sitzt, in der Verbindungsposition gehalten. In dieser stützt sich der Verbindungszapfen 37 in Richtung zur zweiten Welle 32 mit einer Schulter 43 gegen eine Schulterfläche 42 der Durchgangsbohrung 26 ab. Zum Verschieben des Verbindungszapfens 37 wird der Sicherungsring 41 aus der Umfangsnut 44 entfernt. Daraufhin kann der Verbindungszapfen 37 verschoben werden, wobei hierzu eine Gewindebohrung 45 dient, die koaxial zur Drehachse D an dem von der zweiten Welle 32 abgewandten Ende des Verbindungszapfens 37 vorgesehen ist. In diese Gewindebohrung 45 lässt sich ein Werkzeug einschrauben, mit dem der Verbindungszapfen 37 aus der zweiten Welle 32 gezogen werden kann.

An dem der zweiten Welle 32 zugewandten Ende des Verbindungszapfens 37 weist dieser eine stirnseitige Zentrierausnehmung 46 in Form einer Sacklochbohrung auf. In diese tauscht in der Verbindungsposition ein Zentrierzapfen 47 der zweiten Welle 32 ein. Der Zentrierzapfen 47 und die Zentrierausnehmung 46 sind koaxial zur Drehachse D angeordnet. Der Zentrierzapfen 47 ist Bestandteil eines Zentrierelements 50, das in der Sacklochbohrung 33 der zweiten Welle 32 sitzt und mittels einer Befestigungsschraube 48 gesichert ist. Der Zentrierzapfen 47 weist eine Außenfläche 49 auf, die teilweise ballig gestaltet ist, so dass der Zentrierzapfen 47 geringfügige Winkelbewegungen gegenüber dem Verbindungszapfen 37 vollziehen kann, beziehungsweise Winkelungenauigkeiten zwischen der ersten Welle 25 und der zweiten Welle 32 ausgleichen kann. Um das Ausgleichen von Winkelungenauigkeiten zu verbessern, ist ferner vorgesehen, dass zwischen der Längsverzahnung 36 der Sacklochbohrung 33 der zweiten Welle 32 und der in dieser in Eingriff befindlichen Längsverzahnung 39 des Verbindungszapfens 37 ein vergrößertes Radialspiel vorliegt, dass heißt ein größeres Radialspiel vorgesehen wird als es üblicherweise bei Längsverzahnungen für Drehmomentübertragung vorgesehen wird. Ferner ist die axiale Länge der in Eingriff befindlichen Längsverzahnungen 36, 39 verhältnismäßig kurz ausgebildet, so dass die zweite Welle 32 trotz Eingriffs der Längsverzahnungen 36, 39 geringe Winkelungenauigkeiten ausgleichen kann. Die Längsverzahnung 39 des Verbindungszapfens 37 kann auch als Bogenverzahnung ausgebildet sein, welche mit einer geraden Längsverzahnung 36 der zweiten Welle 32 in Eingriff ist, so dass in einfacher Weise Winkelungenauigkeiten ausgeglichen werden können. Beim Vorsehen einer Bogenverzahnung ist kein erhöhtes Radialspiel erforderlich. Aus Kostengründen kann jedoch die Variante mit zwei geraden Längsverzahnungen, die miteinander in Eingriff sind und ein erhöhtes Radialspiel aufweisen, vorgesehen sein.

Die zweite Welle 32 weist eine Außenfläche 52 auf, auf der eine Hülse 51 axial verschiebbar angeordnet ist. In Figur 2 ist die Hülse in einer Sperrposition dargestellt, in der sowohl das der ersten Welle 25 zugewandte Ende der zweiten Welle 32 und das der zweiten Welle 32 zugewandte Ende der ersten Welle 25 in eine Bohrung 57 der Hülse 51 eintauchen. In der Sperrposition ist die Hülse 51 gegenüber der ersten Welle 25 mit einem Dichtring 53 und gegenüber der Außenfläche 52 der zweiten Welle 32 mit einem Dichtring 54 abgedichtet. Somit sind die Längsverzahnungen 35, 36, 39, 40 nach außen hin abgedichtet. Zur Abschmierung der Längsverzahnungen 35, 36, 39, 40 dient ein Schmiernippel 58, der mit einem Schmierkanal 59 im Verbindungszapfen 37 verbunden ist, wobei der Schmierkanal 59 in die Zentrierausnehmung 46 mündet.

Zur axialen Sicherung ist in der Hülse 51 eine Sicherungsbohrung 56 vorgesehen, welche die Drehachse D mit Abstand kreuzt und teilweise die Bohrung 57 schneidet. In der Sperrposition ist die Sicherungsbohrung 56 axial in der gleichen Position angeordnet, wie eine Außenumfangsnut 55 in der Außenfläche 52 der zweiten Welle 32. In die Sicherungsbohrung 56 wird eine hier nicht dargestellte Sicherungsschraube eingeschraubt, die dann in die Außenumfangsnut 55 eintaucht und die Hülse 51 axial sichert. Zum Lösen wird die Sicherungsschraube aus der Sicherungsbohrung 56 entfernt, so dass die Hülse 51 in der Darstellung gemäß Figur 2 nach rechts geschoben werden kann, bis die Hülse 51 vollständig auf der Außenfläche 52 angeordnet ist bzw. das der zweiten Welle 32 zugewandte Ende des Verbindungszapfens 37 nicht mehr in der Bohrung 57 der Hülse 51 angeordnet ist.

Insgesamt ist die zweite Welle 32 gegenüber der ersten Welle 25 axial verschiebbar. Hierzu dienen die Längsverzahnungen 36, 39. Zudem lässt auch die Hülse 51 eine Verlagerung zu. Die ganze Verbindungsanordnung dient somit als Loslager für die anzutreibende Einzugswalze.

### Bezugszeichenliste

- 1: Antriebsmotor
- 2: Kurbelwelle
- 3: Motorabtriebsgetriebe
- 4: Riemenscheibe / Antriebsriemenscheibe
- 5: Riementrieb
- 6: Riemen
- 7: Schaltkupplung
- 8: erste Hydropumpe
- 9: erste Abtriebsriemenscheibe
- 10: Häckseltrommel
- 11: zweite Abtriebsriemenscheibe
- 12: Nachbeschleunigertrommel
- 13: Riemenspanner
- 14: erster Hydromotor
- 15: Getriebe
- 16: Gelenkwellenanordnung
- 17: zweiter Hydromotor
- 18: Einzugseinheit
- 19: erstes Einzugsgetriebe
- 20: Abtriebswelle
- 21, 21': untere Einzugswalze
- 22: Gelenkwelle
- 23: zweites Einzugsgetriebe
- 24, 24': obere Einzugswalze ,
- 25: erste Welle
- 26: Durchgangsbohrung
- 27: Innenumfangsfläche
- 28: Kegelrollenlager
- 29: Kegelrollenlager
- 30: Getriebegehäuse
- 31: Stirnrad
- 32: zweite Welle
- 33: Sacklochbohrung
- 34: Innenumfangsfläche
- 35: Längsverzahnung
- 36: Längsverzahnung
- 37: Verbindungszapfen
- 38: Außenumfangsfläche
- 39: Längsverzahnung
- 40: Längsverzahnung
- 41: Sicherungsring
- 42: Schulterfläche
- 43: Schulter
- 44: Umfangsnut
- 45: Gewindebohrung
- 46: Zentrierausnehmung
- 47: Zentrierzapfen
- 48: Befestigungsschraube
- 49: Außenfläche
- 50: Zentrierelement
- 51: Hülse
- 52: Außenfläche
- 53: Dichtring
- 54: Dichtring
- 55: Außenumfangsnut
- 56: Sicherungsbohrung
- 57: Bohrung
- 58: Schmiernippel
- 59: Schmierkanal

- D: Drehachse

## Patentansprüche

1. Verbindungsanordnung, insbesondere zwischen einer Einzugswalze (21, 24) und einem Getriebe (19, 23) eines Feldhäckslers, umfassend
eine erste Welle (25), die in einem Getriebegehäuse (30) um eine Drehachse (D) drehbar gelagert ist und eine zentrale Bohrung (26) aufweist,
eine zweite Welle (32), die mit einer Einzugswalze (21, 21', 24, 24') verbindbar ist und die um die Drehachse (D) drehbar gelagert ist, wobei die zweite Welle (32) eine zentrale Bohrung (33) aufweist, die mit der Bohrung (26) der ersten Welle (25) fluchtet,
einen Verbindungszapfen (37), der in der Bohrung (26) einer der beiden Wellen (25) sitzt und zur Drehmomentmitnahme mit dieser formschlüssig verbunden ist und der entlang der Drehachse (D) zwischen einer in die Bohrung (33) der anderen der beiden Wellen (32) eingeschobenen Verbindungsposition und einer aus der Bohrung (33) der anderen der beiden Wellen (32) herausgezogenen Freigabeposition axial verschiebbar ist, wobei der Verbindungszapfen (37) in der Verbindungsposition formschlüssig mit der anderen der beiden Wellen (32) verbunden ist,
wobei die erste Welle (25) als Hohlwelle gestaltet ist und
wobei der Verbindungszapfen (37) ausgehend von der der zweiten Welle (32) entgegen gesetzten Seite der ersten Welle (25) in die Bohrung (26) der ersten Welle (25) eingeschoben werden kann.

2. Verbindungsanordnung nach Anspruch 1,
**dadurch gekennzeichnet,**
**dass** der Verbindungszapfen (37) in der Bohrung (26) der ersten Welle (25) sitzt und in der Verbindungsposition in die Bohrung (33) der zweiten Welle (32) eingeschoben und in der Freigabeposition aus der Bohrung (33) der zweiten Welle (32) herausgezogen ist.

3. Verbindungsanordnung nach einem der Ansprüche 1 oder 2,
**dadurch gekennzeichnet,**
**dass** die erste Welle (25) auf der der zweiten Welle (32) abgewandten Seite des Getriebegehäuses (30) aus diesem herausgeführt ist.

4. Verbindungsanordnung nach einem der Ansprüche 1 bis 3,
**dadurch gekennzeichnet,**
**dass** der Verbindungszapfen (37) auf einer Außenumfangsfläche (38) eine Längsverzahnung (40) aufweist, die mit einer Längsverzahnung (35) in einer Innenumfangsfläche (27) der Bohrung (26) der ersten Welle (25) in Eingriff ist.

5. Verbindungsanordnung nach einem der Ansprüche 1 bis 4,
**dadurch gekennzeichnet,**
**dass** der Verbindungszapfen (37) auf einer Außenumfangsfläche (38) eine Längsverzahnung (39) aufweist, die in der Verbindungsposition mit einer Längsverzahnung (36) in einer Innenumfangsfläche (34) der Bohrung (33) der zweiten Welle (32) in Eingriff ist.

6. Verbindungsanordnung nach Anspruch 5,
**dadurch gekennzeichnet,**
**dass** zwischen der Längsverzahnung (39) des Verbindungszapfens (37) und der mit dieser in Eingriff befindlichen Längsverzahnung (36) der zweiten Welle (32) ein Radialspiel vorgesehen ist, das begrenzte Winkelabweichungen zwischen der ersten Welle (25) und der zweiten Welle (32) zulässt.

7. Verbindungsanordnung nach einem der Ansprüche 1 bis 6,
**dadurch gekennzeichnet,**
**dass** die zweite Welle (32) einen Zentrierzapfen (47) aufweist, der in der Verbindungsposition in einer Zentrierausnehmung (46) des Verbindungszapfens (37) sitzt.

8. Verbindungsanordnung nach Anspruch 7,
**dadurch gekennzeichnet,**
**dass** der Zentrierzapfen (47) eine zumindest teilweise ballige Außenfläche (49) aufweist.

9. Verbindungsanordnung nach Anspruch 7 oder 8,
**dadurch gekennzeichnet,**
**dass** die Bohrung der zweiten Welle (32) als Sacklochbohrung (33) ausgebildet ist, in der ein Zentrierelement (50) einsitzt, wobei das Zentrierelement (50) den Zentrierzapfen (47) aufweist.

10. Verbindungsanordnung nach einem der Ansprüche 1 bis 9,
**dadurch gekennzeichnet,**
**dass** eine Hülse (51) vorgesehen ist, die axial verschiebbar auf einer der beiden Wellen (32) sitzt und in einer Sperrposition zusätzlich die andere der beiden Wellen (25) teilweise aufnimmt.

## Claims

1. Connection arrangement, especially between a feed auger (21, 24) and a transmission (19, 23) of a field chopper, comprising
a first shaft (25), which is rotatably supported in a transmission housing (30) around an axis of rotation (D) and which has a central bore (26),
a second shaft (32), which is connectable to a feed auger (21, 21', 24, 24') and which is rotatably supported around the axis of rotation (D), wherein the second shaft (32) has a central bore (33), which is aligned with the bore (26) of the first shaft (25),
a connection trunnion (37), which rests in the bore (26) of one of the two shafts (25) and is connected form-fittingly for the torque transmission to the same and is axially displaceable along the axis of rotation (D) between a connection position, in which it is inserted into the bore (33) of the other of the two shafts (32), and a released position, in which it is pulled out of the bore (33) of the other of the two shafts (32), wherein the connection trunnion (37) is connected in the connection position form-fittingly to the other of the two shafts (32),
wherein the first shaft (25) is formed as a hollow shaft and
wherein the connection trunnion (37) can be inserted, starting from the side of the first shaft (25), opposite to the second shaft (32), into the bore (26) of the first shaft (25).

2. Connection arrangement according to claim 1,
**characterised in**
**that** the connection trunnion (37) rests in the bore (26) of the first shaft (25) and is inserted in the connection position into the bore (33) of the second shaft (32) and is pulled out of the bore (33) of the second shaft (32) in the released position.

3. Connection arrangement according to one of claims 1 or 2, **characterised in**
**that** the first shaft (25) projects out of the transmission housing from the side of the transmission housing (30), facing away from the second shaft (32).

4. Connection arrangement according to one of claims 1 to 3, **characterised in**
**that** the connection trunnion (37) has on an outer circumferential face (38) a longitudinal toothing (40), which is engaged in a longitudinal toothing (35) in an inner circumferential face (27) of the bore (26) of the first shaft (25).

5. Connection arrangement according to one of claims 1 to 4, **characterised in**
**that** the connection trunnion (37) has on an outer circumferential face (38) a longitudinal toothing (39), which engages in the connection position in a longitudinal toothing (36) in an inner circumferential face (34) of the bore (33) of the second shaft (32).

6. Connection arrangement according to claim 5,
**characterised in**
**that** a radial play is provided between the longitudinal toothing (39) of the connection trunnion (37) and the longitudinal toothing (36) of the second shaft (32), which engages this, which play enables a limited angular deviation between the first shaft (25) and the second shaft (32).

7. Connection arrangement according to one of claims 1 to 6, **characterised in**
**that** the second shaft (32) has a centring trunnion (47), which rests in the connection position in a centring recess (46) of the connection trunnion (37).

8. Connection arrangement according to claim 7,
**characterised in**
**that** the centring trunnion (47) has an outer face (49), which is at least partially convex.

9. Connection arrangement according to claim 7 or 8,
**characterised in**
**that** the bore of the second shaft (32) is formed as a blind bore (33), in which a centring element (50) rests, wherein the centring element (50) has the centring trunnion (47).

10. Connection arrangement according to one of claims 1 to 9,
**characterised in**
**that** a sleeve (51) is provided, which rests axially displaceable on one of the two shafts (32) and which, in a locking position, partially accommodates additionally the other of the two shafts (25).

## Revendications

1. Dispositif de liaison, en particulier entre un rouleau d'alimentation (21, 24) et une transmission (19, 23) d'une ramasseuse-hacheuse, comprenant
un premier arbre (25), qui est logé dans un carter de transmission (30) de façon à pouvoir tourner autour d'un axe de rotation (D) et présente un alésage central (26),
un second arbre (32), qui peut être relié à un rouleau d'alimentation (21, 21', 24, 24') et qui est monté de façon à pouvoir tourner autour de l'axe de rotation (D), le second arbre (32) présentant un alésage (33) central, qui est aligné avec l'alésage (26) du premier arbre (25),
un tenon de liaison (37), qui est logé dans l'alésage (26) de l'un des deux arbres (25) et est relié par complémentarité de formes avec cet arbre pour l'entraînement du couple et qui peut coulisser axialement le long de l'axe de rotation (D) entre une position de liaison, qui est introduite dans l'alésage (33) de l'autre des deux arbres (32), et une position de libération extraite de l'alésage (33) de l'autre des deux arbres (32), le tenon de liaison (37) étant relié dans la position de liaison par complémentarité de formes avec l'autre des deux arbres (32),
le premier arbre (25) étant conçu comme arbre creux et
le tenon de liaison (37) pouvant être introduit à partir du côté, opposé au second arbre (32), du premier arbre (25) dans l'alésage (26) du premier arbre (25).

2. Dispositif de liaison selon la revendication 1,
**caractérisé en ce que**
le tenon de liaison (37) est situé dans l'alésage (26) du premier arbre (25) et est introduit, dans la position de liaison, dans l'alésage (33) du second arbre (32) et est sorti, dans la position de libération, de l'alésage (33) du second arbre (32).

3. Dispositif de liaison selon l'une quelconque des revendications 1 ou 2,
**caractérisé en ce que**
le premier arbre (25) est guidé sur le côté, opposé au second arbre (32), du carter de transmission (30) à la sortie de celui-ci.

4. Dispositif de liaison selon l'une quelconque des revendications 1 à 3,
**caractérisé en ce que**
le tenon de liaison (37) présente sur une surface périphérique extérieure (38) une denture longitudinale (40), qui est en prise avec une denture longitudinale (35) dans une surface périphérique intérieure (27) de l'alésage (26) du premier arbre (25).

5. Dispositif de liaison selon l'une quelconque des revendications 1 à 4,
**caractérisé en ce que**
le tenon de liaison (37) présente sur une surface périphérique extérieure (38) une denture longitudinale (39), qui est en prise, dans la position de liaison, avec une denture longitudinale (36) dans une surface périphérique intérieure (34) de l'alésage (33) du second arbre (32).

6. Dispositif de liaison selon la revendication 5,
**caractérisé en ce que**
un jeu radial, qui autorise des écarts d'angle limités entre le premier arbre (25) et le second arbre (32), est prévu entre la denture longitudinale (39) du tenon de liaison (37) et la denture longitudinale (36), se trouvant en prise avec la première denture, du second arbre (32).

7. Dispositif de liaison selon l'une quelconque des revendications 1 à 6,
**caractérisé en ce que**
le second arbre (32) présente un tenon de centrage (47), qui est logé, dans la position de liaison, dans un évidement de centrage (46) du tenon de liaison (37).

8. Dispositif de liaison selon la revendication 7,
**caractérisé en ce que**
le tenon de centrage (47) présente une surface extérieure (49) au moins partiellement renflée.

9. Dispositif de liaison selon la revendication 7 ou 8,
**caractérisé en ce que**
l'alésage du second arbre (32) est conçu comme alésage borgne (33) dans lequel est inséré un élément de centrage (50), l'élément de centrage (50) présentant le tenon de centrage (47).

10. Dispositif de liaison selon l'une quelconque des revendications 1 à 9,
**caractérisé en ce que**
il est prévu un manchon (51), qui est logé sur l'un des deux arbres (32) de façon à pouvoir coulisser axialement et reçoit partiellement en supplément l'autre des deux arbres (25) dans une position de blocage.
